# FASCICULE DE BREVET EUROPEEN

(11) **EP 1 393 272 B1**
(45) Date de publication et mention de la délivrance du brevet: **23.02.2005**
(21) Numéro de dépôt: 02740840.0
(22) Date de dépôt: 28.05.2002
(51) Int. Cl.: G07F 19/00, G07F 7/08, H04Q 7/38

(54) **PROC D ET DISPOSITIF DE CERTIFICATION D'UNE TRANSACTION**
VERFAHREN UND VORRICHTUNG ZUM BEGLAUBIGEN EINER TRANSAKTION
METHOD AND DEVICE FOR CERTIFICATION OF A TRANSACTION

(30) Priorité: 01.06.2001 FR 0107286
(43) Date de publication de la demande: 03.03.2004
(73) Titulaire: Société Française du Radiotéléphone-SFR, 75008 Paris (FR)
(72) Inventeur: WARY, Jean-Philippe, F-92340 Bourg La Reine (FR); ARNASSAND, Daniel, F-94230 Cachan (FR)
(74) Mandataire: Schmit, Christian Norbert Marie
(86) Numéro de dépôt international: PCT/FR2002/001799
(87) Numéro de publication internationale: WO 2002/097751

(56) Documents cités:
- EP-A- 1 014 317
- WO-A-98/37663
- WO-A-98/52151
- WO-A-99/01848
- VAN BOSCH J: "CREDIT-CARD ENCRYPTION WITH KEY STORAGE" MOTOROLA TECHNICAL DEVELOPMENTS, MOTOROLA INC. SCHAUMBURG, ILLINOIS, US, vol. 15, 1 mai 1992 (1992-05-01), pages 21-22, XP000305724

## Description

La présente invention a pour objet un procédé ainsi qu'un dispositif de certification d'une transaction. Elle est principalement destinée à être utilisée dans le domaine de la téléphonie mobile de tout type (GSM, GPRS, UMTS...) et à régir une transaction se produisant entre un utilisateur d'un téléphone mobile et un partenaire à la transaction.

Dans le domaine des transactions, les transactions les plus connues sont celles qui correspondent à des achats et des ventes. Toutefois, il est possible par ailleurs de considérer comme transaction le fait de transmettre des informations à un partenaire, charge à ce dernier de vérifier que les informations qui lui sont transmises ne sont pas entachées de tromperies mais sont authentiques. On peut également envisager l'utilisation de l'invention dans le cadre du contrôle d'accès, la transaction résulte dans ce cas d'une demande d'autorisation d'accès. Pour simplifier, l'invention sera décrite dans le cadre d'une opération de vente, parce qu'une telle opération est bien représentative de l'ensemble des problèmes qui peuvent se présenter au cours d'une telle transaction. Mais toutes les transactions sont concernées par l'invention.

Dans le domaine des achats, notamment des achats sur le réseau Internet, un acheteur, par exemple un utilisateur d'un téléphone mobile, se connecte à un site Internet en particulier au cours d'une session WAP (Wireless Application Protocol - protocole d'application sans fil). Au cours de cette session, il projette une transaction avec un partenaire, fournisseur de biens ou de services qui met ses biens ou ses services à disposition sur ce site Internet. Une transaction comporte essentiellement l'édition d'un message de transaction. Ce message peut être édité par l'un quelconque des acteurs à la transaction, l'utilisateur du téléphone mobile ou le partenaire auquel il s'adresse. Dans tous les cas, ce partenaire est synonyme bien entendu non seulement d'une personne physique ou morale mais également de moyens de type informatique pour entrer en relation avec le téléphone mobile de l'utilisateur et pour convenir entre eux de la nature du message de transaction. S'agissant d'une vente, un message de transaction doit comporter certaines informations indispensables : en général la date, le prix de la transaction, la monnaie, la désignation de l'objet, un numéro de série de la transaction ainsi que le nom de l'acquéreur. La transaction comporte enfin une mise à disposition du bien ou du service acheté et, en contrepartie, le paiement de cette mise à disposition.

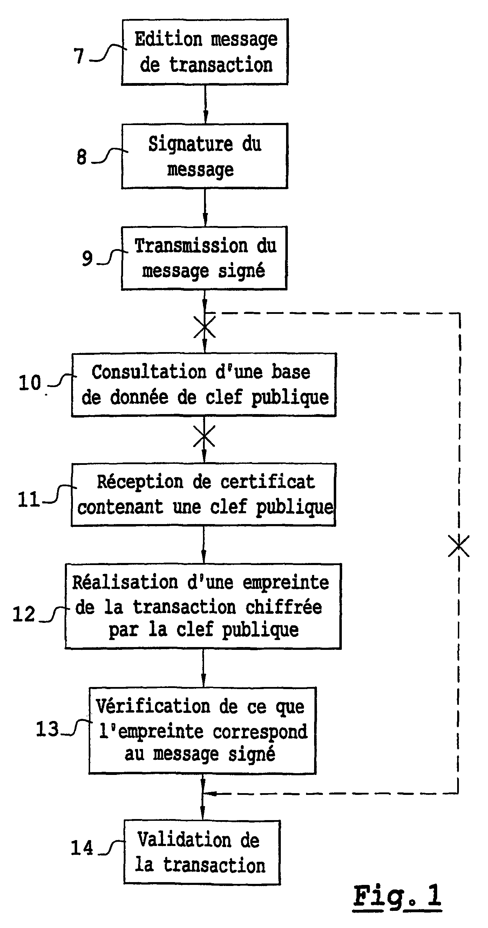

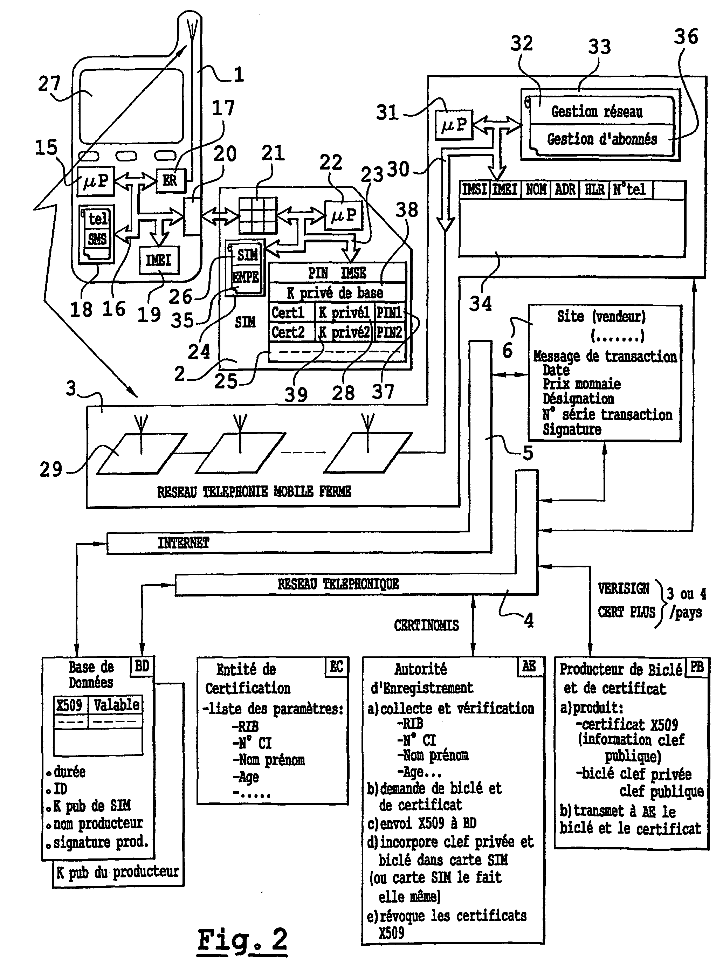

Compte tenu du caractère sensible d'un message de transaction, celui-ci doit être sécurisé. Une sécurisation possible des transactions résulte de l'utilisation d'algorithmes de cryptage symétriques. Une autre sécurisation possible des transactions résulte de l'utilisation d'algorithmes de cryptage à clefs asymétriques ou bi-clef : à clef privée pour signer le message, et à clef publique pour vérifier l'authenticité du message de transaction signé. Deux paramètres essentiels représentatifs d'une sécurisation efficace d'une transaction concernent d'une part la propriété de non-répudiation, du fait de l'utilisation d'un mécanisme de signature numérique qui signe le message de transaction, et d'autre part la confidentialité autorisée par le chiffrement du contenu du message. Les étapes d'un procédé correspondant à une signature d'une telle transaction sont représentées sur la figure 1, les moyens nécessaires pour le mettre en oeuvre sont représentés sur la figure 2.

Les moyens d'édition d'un message de transaction comportent, figure 2, un téléphone mobile 1 muni de préférence d'une carte 2 à puce (de préférence SIM, ou USIM utilisée au sein d'un réseau mobile de troisième génération) et susceptible de rentrer en relation avec un réseau de téléphonie mobile 3. Une carte SIM (Subscriber Identification Module - module d'identification d'abonnés) est une carte à puce dont la puce comporte des informations d'abonnement et d'authentification de l'utilisateur du téléphone mobile. Le réseau de téléphonie mobile 3 peut être connecté, notamment par l'intermédiaire d'un réseau téléphonique commuté classique 4, ou par l'intermédiaire du réseau Internet 5 avec un site 6 d'un vendeur, plus généralement d'un partenaire auquel l'utilisateur du téléphone mobile 1 s'adresse. Le site 6 est de préférence un site Internet, mais ce n'est pas une obligation. Un site du type Minitel est également envisageable. Le téléphone mobile 1 et/ou le site 6 comportent des moyens pour, au cours d'une première étape 7, figure 1, éditer le message de la transaction. Puis, le téléphone mobile 1 procède, au cours d'une étape 8, à une sécurisation du message de la transaction. Le message est signé par l'émetteur, en particulier à l'aide d'une clef privée contenue dans une mémoire secrète du téléphone mobile 1, en particulier une mémoire secrète contenue dans la carte SIM 2.

Le message signé est ensuite transmis par le téléphone mobile 1 au cours d'une étape 9 au site 6. Celui-ci met alors en oeuvre un procédé de vérification de la cohérence et de l'authenticité du message de transaction reçu. La vérification nécessite l'utilisation de la clef publique de l'émetteur. Cette clef est généralement disponible sous la forme d'un certificat numérique (du type X509 par exemple). La fourniture ou la récupération de ce certificat est effectuée au cours d'une étape 10 de consultation d'une base de données de clefs publiques.

En pratique, la mise en place d'un système de certification de type asymétrique nécessite l'intervention de plusieurs entités ou autorités conduisant à la cohérence de la gestion des clefs publiques et privées.

En tout premier lieu, une entité de certification, EC, du type organisme normatif définit les conditions des certifications. Notamment pour les messages de paiement, l'entité EC définit la liste des paramètres que doivent contenir les messages de transaction, par exemple des numéros de relevés d'identité bancaire RIB, des numéros de cartes d'identité, les nom et prénom des différents utilisateurs, leur âge, et d'autres informations. Cette entité normative de certification EC conditionne le travail des autorités d'enregistrement, AE. Ces autorités d'enregistrement AE sont chargées de diverses opérations.

Premièrement, a), elles sont chargées de la collecte et de la vérification des informations devant figurer dans des certificats conformément à la liste de paramètres produite par l'entité de certification.

Deuxièmement, b) l'autorité d'enregistrement AE est responsable de la demande de production d'un certificat électronique (préférablement de type X509, V3 ou V4). Deux cas sont alors possibles :
- soit un bi-clef existe déjà au sein de la carte SIM, la clef publique peut alors être extraite par lecture de la carte,
- soit il est nécessaire de produire le bi-clef, dans ce cas celui-ci peut être produit en propre par la carte SIM (on préfère cette méthode qui permet de maintenir confinée la clef privée de l'utilisateur), celle-ci mettant alors à disposition (en lecture sur son bus externe) la clef publique générée. Ou alors, deuxième hypothèse, l'autorité AE génère un bi-clef et l'installe dans la carte SIM. Ce type de scénario est toutefois plus faible en terme de sécurité.

Troisièmement, c), l'autorité d'enregistrement AE est chargée d'envoyer à un organisme gérant une base de données BD les certificats qu'elle a demandés et obtenus. L'autorité AE peut alors lier les données identifiantes déjà collectées avec la clef publique de l'abonné au sein d'un certificat.

Quatrièmement, d), l'autorité d'enregistrement AE incorpore chaque clef privée d'un bi-clef, dans une carte SIM à un endroit où cette clef privée ne pourra pas être lue et affichée sur un bus externe du téléphone mobile 1. En variante, l'opération de création de bi-clef et d'enregistrement de la clef privée dans la carte SIM est réalisée par la carte SIM elle-même, si elle contient dans une mémoire programme un programme à cet effet. La mise à la disposition de l'utilisateur de son propre certificat peut se réaliser directement par un chargement de celui-ci dans une zone sécurisée de la carte SIM ou du mobile, ou par l'utilisation d'une indirection logique réalisée par le positionnement d'une URL (adresse d'un site du réseau Internet) dans la carte SIM en lieu et place de la valeur du certificat. Cette URL pointe directement sur un champ de la base de données BD. On préfère cette solution qui offre une plus grande souplesse de gestion des certificats.

Enfin cinquièmement, e), l'autorité d'enregistrement AE est chargée de révoquer les certificats X509 qui correspondent à des certificats pour lesquels les utilisateurs ont demandé qu'ils ne puissent plus être utilisés. Une telle révocation peut être demandée pour des raisons commerciales, ou tout simplement parce que la carte SIM et/ou le téléphone mobile 1 ont été volés.

La base de données BD est normalement accessible en lecture par tous à partir du réseau Internet, et, en lecture/écriture, par l'autorité d'enregistrement AE seulement, par une liaison de type privée par le réseau téléphonique 4. Dans la base BD sont enregistrés des certificats. Chaque enregistrement de certificat comporte un certificat, par exemple de type X509, assorti d'un index de validité. Le certificat est valable tant qu'il n'a pas été révoqué par l'autorité d'enregistrement AE. Pour produire les certificats, l'autorité d'enregistrement AE s'adresse à un producteur CE/PB de certificats et/ou de bi-clefs. Un tel producteur de certificats PB produit, a), des certificats X509 et éventuellement des couples de bi-clefs comprenant une clef privée et une clef publique. Un tel producteur PB est par ailleurs chargé, b), de transmettre à l'autorité d'enregistrement AE le certificat et/ou le bi-clef. Toutes ces productions et transmissions sont hautement sécurisées.

Sur le plan pratique, un certificat qui est totalement en clair comporte une indication de validité sous la forme d'une durée et une information d'identification de l'utilisateur, typiquement le nom, éventuellement l'adresse de cet utilisateur. Le certificat comporte encore la clef publique de la carte SIM (alors que la clef privée du bi-clef a elle été chargée dans une zone secrète de la carte SIM 2). Le certificat X509 comprend en outre le nom du producteur PB du certificat ainsi que la signature du certificat par ce producteur. Cette signature est une suite numérique, en pratique une suite de bits, chiffrée avec une clef privée du certificateur. Pour vérifier la cohérence du certificat, la base BD ou une autre met à disposition une clef publique des certificateurs permettant cette vérification.

En conséquence l'étape 10 de vérification du message de transaction signé peut être menée à terme sans trop de difficultés. Le message de transaction signé comporte dans ce but les références PB du producteur du certificat et l'identité de l'utilisateur du téléphone mobile 1. Dans ces conditions, le site 6 peut faire un accès à la base de données BD, au moins à la sous-section de celle-ci qui concerne le producteur de bi-clef PB et rechercher dans cette base, pour l'utilisateur dont elle connaît le nom, le certificat X509 qui lui correspond. Soumis à cette requête, la base de données BD envoie au cours d'une étape 11 le certificat demandé au site 6. Le site 6 peut par ailleurs vérifier la cohérence du certificat.

En outre, le site 6 connaît d'une part la transaction, notamment parce qu'il a participé à l'édition du message de transaction 7. D'autre part, le site 6 connaît le message signé de la transaction puisque le téléphone mobile 1 le lui a transmis. Dans ces conditions le site 6 réalise au cours d'une étape 12 une empreinte numérique de la transaction. Cette empreinte peut être obtenue en Utilisant une fonction de hachage à sens unique, du type MD5 ou SHA.1 par exemple. Au cours d'une étape 13, le site 6 vérifie que la signature ainsi calculée correspond. au message de transaction signé reçu. Cette vérification est réalisée par un déchiffrement de la signature avec la clef publique de l'utilisateur. Si le résultat de ce déchiffrement correspond à l'empreinte numérique calculée lors de l'étape 12, le site 6 a alors vérifié que la signature se rapporte bien au message de transaction et que l'utilisateur en est bien à l'origine. Si cette vérification est concluante, le site 6 provoque une validation 14 de la transaction. Cette validation de la transaction peut, dans le cas d'un contrôle d'accès, permettre un accès à un endroit protégé à l'utilisateur du téléphone mobile. Cette validation permet aussi l'utilisation sereine d'informations transmises dans le cas où il s'agirait d'une transmission d'informations. Dans le cas d'une vente, cette validation provoque (en un endroit convenu) l'ouverture physique d'un guichet de mise à disposition de l'utilisateur du téléphone mobile 1, et plus généralement la délivrance réelle d'un bien ou service dont il vient de faire l'acquisition par cette transaction.

Une telle procédure sécurisée est donc prévue pour éviter les fraudes, notamment les utilisations frauduleuses des téléphones mobiles volés. En pratique, lorsqu'un utilisateur se fait subtiliser son téléphone mobile, ou lorsqu'il ne veut plus utiliser un certificat (par exemple parce que l'autorité d'enregistrement AE est affiliée avec une banque dont il vient de se séparer), il demande à l'autorité d'enregistrement AE de révoquer, dans la base de données BD, le certificat X509 concerné. De ce fait toutes les transactions lancées avec la clef privée correspondant à ce certificat révoqué amèneront l'échec de l'étape 13, et en définitive le blocage de la transaction. Une telle révocation souffre cependant d'un manque d'efficacité en temps réel. En pratique, la révocation d'un certificat demande de 24 à 48h selon que les autorités concernées sont situées dans un même pays ou dans des pays différents, voire dans des pays différents du pays du gestionnaire du site 6.

En outre, d'autres problèmes surviennent du fait de l'encombrement des réseaux 4 et notamment 5, et des difficultés de communication. Il peut arriver notamment que la consultation de la base de données BD à l'étape 10 ne soit pas possible, du fait d'un embouteillage momentané du réseau Internet par exemple. Pour les mêmes raisons, il est possible également que le certificat contenant la clef publique révoquée ne puisse être transmis (voire soit transmis avec un état valable alors qu'il a été révoqué tandis que la base de données BD n'a pas été mise à jour). Il arrive alors dans ce cas, que le partenaire à la transaction se prive de la sécurité momentanément inaccessible, et accepte la transaction telle qu'elle se présente. Il encourt alors seul les risques d'une fraude. Le problème de la révocation en temps réel est donc un problème grave qu'il convient de résoudre.

Dans l'invention on prévoit de remédier à ce problème de révocation en temps réel, que l'on ne sait pas résoudre actuellement, en empêchant, en temps réel ou presque, le téléphone mobile de signer ou de transmettre correctement un quelconque message de transaction signé. De cette manière, il est garanti une confiance très significativement améliorée dans l'opération de transaction certifiée. Dans ce but une intervention d'empêchement en temps réel est effectuée en faisant transmettre par les services de l'opérateur de téléphonie mobile du réseau 3 un message au téléphone mobile 1, et en particulier à la carte SIM 2. Ce message a pour but d'inactiver des moyens d'utilisation correcte de la clef privée confinée dans la carte SIM de l'utilisateur. Ce message a pour effet de faire perdre à la carte SIM 2 les moyens d'utiliser correctement sa clef privée de chiffrement. On verra que ces moyens d'utilisation correcte peuvent intervenir à différents stades, limitation de production d'un message signé correct, ou bien limitation de transmission d'un message signé correct. En agissant ainsi, avec l'invention on bloque le processus dès l'étape 8 ou dès l'étape 9. L'intervention en temps réel peut être déclenchée soit par l'utilisateur du téléphone 1 qui prévient l'opérateur du réseau de téléphonie mobile 3, soit par la base de données BD qui prévient ce même opérateur. Dans les deux cas, le défaut de consultation de la base de données BD ne pourra conduire à ce qu'une transaction non désirée soit validée, et donc ainsi que cette transaction soit annulée ou révoquée.

Un autre avantage du procédé selon l'invention est apporté du fait de l'asynchronisme total entre les signatures électroniques de transactions et le référentiel pour la validité du certificat.

L'invention a pour objet un procédé de certification en téléphonie mobile entre un utilisateur d'un téléphone mobile et un partenaire dans lequel un message d'une transaction entre l'utilisateur et le partenaire est édité, le message étant signé au moyen d'un algorithme de signature et d'authentification, le procédé étant remarquable en ce que pour autoriser une révocation de la transaction en temps réel, on empêche dans le téléphone mobile que le message de transaction soit correctement signé et/ou correctement transmis en neutralisant le procédé de signature et/ou de transmission du certificat de transaction à valider, cet empêchement étant réalisé par l'envoi d'un message d'empêchement au téléphone mobile.

En effet le procédé selon l'invention est indépendant de la technologie de chiffrement mise en oeuvre pour réaliser les signatures numériques et peut donc s'appliquer à des technologies à clefs secrètes (algorithmes de cryptage symétriques) ou à bi-clefs (clefs asymétriques et algorithmes de cryptage asymétriques).

Ainsi l'invention a aussi pour objet un procédé de certification de transaction en téléphonie mobile entre un utilisateur d'un téléphone mobile et un partenaire dans lequel
- un message d'une transaction entre l'utilisateur et le partenaire est édité,
- le message de la transaction est signé avec une clé privée de l'utilisateur, cette clé privée étant contenue dans le téléphone mobile de l'utilisateur,
- le message de transaction signé est transmis au partenaire,
- le partenaire doit se procurer la clé publique correspondant à l'utilisateur,
- le partenaire doit vérifier le message de transaction signé à l'aide de la clé publique correspondante,
caractérisé en ce que, pour autoriser une révocation de la transaction en temps réel,
- on empêche, dans le téléphone mobile, que le message de transaction soit correctement signé et ou correctement transmis, et pour cela on neutralise l'utilisation de la clef privée contenue dans le téléphone mobile, cet empêchement étant réalisé par l'envoi d'un message d'empêchement au téléphone mobile.

L'invention a également pour objet un dispositif de certification d'un message d'une transaction comportant
- un téléphone mobile muni d'une mémoire secrète,
- un microprocesseur de traitement, et
- une mémoire programme contenant un algorithme de signature du message par une clé privée contenue dans la mémoire secrète, et un sous-programme de transmission du message de transaction signé,
caractérisé en ce qu'il comporte
- un moyen de rendre la signature et/ou la transmission incorrectes.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : déjà commentée, les étapes d'une certification selon l'état de la technique ;
- Figure 2 : les moyens mis en oeuvre pour réaliser la certification selon l'état de la technique et la révocation de la certification selon l'invention.

La figure 2 montre le téléphone mobile 1 utilisable pour mettre en oeuvre le procédé de l'invention. Ce téléphone mobile 1 comporte d'une manière conventionnelle un microprocesseur 15 en relation par l'intermédiaire d'un bus 16 de données, d'adresses et de commande avec des circuits d'émission réception 17, une mémoire programme 18, et une mémoire de données 19. Le bus 16 est également en relation avec une interface 20 (en pratique un connecteur) utilisée pour entrer en relation avec une carte à puce 2, notamment de type SIM, par l'intermédiaire d'un connecteur 21. La puce de la carte 2 comporte de la même façon un microprocesseur 22 en relation par un bus 23 du même type que le bus 16 avec une mémoire programme 24 et une mémoire de données 25. Le microprocesseur 22 est apte à mettre en oeuvre un sous-programme 26, intitulé ici SIM, contenu dans la mémoire programme 24. Le sous-programme SIM est un programme de type classique permettant notamment lors d'une première connexion du téléphone mobile 1 au réseau de téléphonie mobile 3, de réclamer la composition d'un code PIN (Personal Identification Number - numéro d'identification personnel) d'utilisation du téléphone mobile, et la transmission aux services de l'opérateur d'un numéro international d'identification d'abonnés IMSI (International Mobile Subscriber Identification). Ces informations PIN et IMSI sont contenues dans des zones secrètes de la mémoire 25. Ces zones secrètes ne sont pas accessibles par l'utilisateur, notamment pour ne pas lui permettre de visualiser ces informations sur un écran 27 du téléphone mobile 1.

Dans le cadre des signatures de transaction, le sous-programme 26 comprend également un algorithme de chiffrement. Cet algorithme de chiffrement utilise une clef privée 28 contenue dans la mémoire 25 pour signer une empreinte numérique ou un message de transaction. Le message de transaction est rédigé dans des termes qui peuvent avoir été affichés sur l'écran 27 et qui, pour le moins, ont fait l'objet d'une négociation au cours d'un échange avec le site 6, notamment par l'intermédiaire du réseau 3 et du réseau Internet 5. De plus, ce message de transaction peut lui-même être signé par le site 6, par l'intermédiaire de l'utilisation de la clef privée du site, comme décrit précédemment. En pratique, les informations relatives à la transaction peuvent provenir du réseau Internet 5. Par contre, le message de transaction signé est de préférence véhiculé par le réseau 3 et le réseau 4 pour aboutir au site 6.

Lors de la première connexion de l'abonné, en particulier lorsque ce dernier reconnecte la batterie de son téléphone mobile 1, le réseau 3 reçoit les signalisations émises par le téléphone 1 et captées par une de ses stations de base 29. Après la phase de contrôle d'accès au réseau mobile (mettant en oeuvre les procédés d'authentification de l'utilisateur propres au réseau, avec en particulier l'utilisation de l'une des données secrètes de la carte SIM), l'utilisateur est considéré localisé. Dès cet instant, l'utilisateur a la possibilité d'entrer en communication au moyen de son téléphone avec l'extérieur (appel téléphonique ou avec le réseau lui-même (par exemple, flux SMS).

Le réseau téléphonique est capable de communiquer avec le mobile et la carte SIM et l'utilisateur dès que ce dernier est localisé (activation du mobile, sortie d'un tunnel, etc.) et cela indépendamment des actions de l'utilisateur. En particulier, le mobile peut recevoir des SMS lors de l'établissement d'une communication vocale ou "data" (transmission de données).

En pratique, cette station 29 transmet ces signaux de signalisation par un bus 30 à un processeur de traitement 31 qui met en oeuvre un programme 32 de gestion de réseau de téléphonie contenu dans une mémoire programme 33. Le programme 32 crée, dans une mémoire de données 34 des services de l'opérateur, des enregistrements faisant correspondre le numéro IMSI de l'abonné, et éventuellement le numéro IMEI de son téléphone mobile, le nom NOM de cet abonné, son adresse ADR (pour lui envoyer les factures correspondant à ses consommations), sa localisation mobile HLR, ainsi que son numéro de téléphone. D'autres informations peuvent être mises en correspondance dans un enregistrement de la mémoire 34. La localisation HLR permet d'identifier la station de base 29 avec laquelle le téléphone 1 est entré en relation avec le réseau 3. Le numéro de téléphone permet d'adresser au téléphone mobile 1 des communications qui lui sont adressées depuis l'extérieur, notamment par le réseau téléphonique 4.

Selon l'invention, le téléphone mobile 1, et plus exactement la carte SIM 2, possède des moyens pour empêcher que les messages de transactions soient correctement signés et/ou correctement transmis. Par exemple ces moyens pour empêcher comportent un sous-programme 35, EMPE, d'empêchement de signature et ou de transmission correcte. Le sous-programme 35 est de préférence contenu dans la mémoire programme 24. Ce sous-programme 35 est sollicité de diverses manières.

D'une manière préférée, le sous-programme 35 est sollicité par un message SMS dans le cadre de la téléphonie mobile de type GSM (ou autres). Un mode de transmission de type SMS (Short Message Service - service de messages courts) permet de constituer trois classes de messages : les messages exécutables par le processeur 22 de la carte SIM 2, les messages exécutables par le processeur 15 du téléphone mobile 1, et les messages directement stockables dans la mémoire de données 19, sans traitement. De préférence, le message d'empêchement et donc de neutralisation, sera un message du premier type (mais la neutralisation pourrait bien entendu être lancée par un message du deuxième type également).

La neutralisation comporte par exemple soit l'altération de la clef privée 28 soit l'altération de la partie du sous-programme 26 qui correspond au chiffrement (inactivation de la signature sur cette clef privée spécifiquement), soit encore l'altération de la partie du sous-programme 26 qui correspond à la transmission du message de transaction signé. Par exemple, on peut altérer, dans la mémoire 25, la valeur de la clef privée 28. En pratique il suffit d'en changer un des bits pour qu'une signature avec une telle clef privée ne soit plus cohérente avec la vérification de l'empreinte réalisée avec la clef publique qui est censée lui correspondre, et que le site 6 aura prélevée dans la base de données BD (avant que celle-ci ne soit mise à jour correctement).

D'une autre manière, dans le sous-programme 26 on peut changer à l'endroit des instructions relatives à l'algorithme de signature, la désignation de l'adresse où doit être prélevée la clef de chiffrement. De cette façon on n'a pas besoin de toucher à cette dernière qui peut alors par ailleurs être protégée de manière totalement inviolable. Ou bien on peut changer un des arguments de l'opération de signature, notamment un opérateur de décalage ou une opération arithmétique de cet algorithme.

En variante, la clef 28 peut être assortie d'un index de validité, qui lui non plus n'a pas besoin d'être situé dans une zone inviolable et qui, avantageusement, peut posséder la particularité de ne pouvoir être basculé irréversiblement que d'un premier état, valable à un deuxième état, d'invalidation. Dans ce cas l'algorithme de chiffrement du sous-programme 26 comporte une étape préalable, de vérification de ce que la clef privée de signature à utiliser est valable, par consultation de cet index de validité.

Toutes les modifications apportées à la clef 28 sont également apportables aux instructions de l'algorithme lui-même, notamment la partie du sous-programme 26 correspondant à cette signature peut elle-même être assortie d'un index de validation qui aurait été invalidé.

La mise en oeuvre du procédé de l'invention est la suivante. L'utilisateur du téléphone 1 entre en relation avec les services généraux de l'opérateur du réseau de téléphonie mobile 3. Il peut aussi directement s'adresser à l'autorité ou l'entité de certification EC lui ayant délivré le certificat, pour faire procéder à la révocation dudit certificat. L'autorité EC entre alors en relation avec l'opérateur du réseau mobile pour faire procéder à cette révocation. Cette relation peut être mise en oeuvre automatiquement au niveau du réseau, par l'autorité EC elle-même, si l'opérateur du réseau mobile lui a mis préalablement à disposition les moyens techniques nécessaires. Ainsi peut être provoquée, notamment par un agent de cet opérateur, la mise en oeuvre d'un programme 36 de gestion d'abonnés. Ce programme 36 comporte alors, selon l'invention, un sous-programme d'émission du message de neutralisation destiné au téléphone mobile 1 et/ou à la carte SIM 2. Le programme 36 comporte en conséquence le repérage, par l'information HLR, de la station de base 29 avec laquelle est connecté le téléphone mobile dont le numéro IMSI correspond au nom et au numéro de téléphone de l'abonné qui vient d'appeler. Le sous-programme 36 envoie donc le message de neutralisation, notamment sur une voie de signalisation (en particulier avec des messages de type SMS), au téléphone mobile 1. Comme le message est sur une voie de signalisation, l'utilisateur du téléphone mobile 1 n'en est même pas particulièrement averti. Les messages sont transmis au téléphone mobile 1, même lorsqu'il est en mode de veille. Le message de neutralisation reçu par le téléphone mobile 1 est alors envoyé à la carte SIM 2 qui met en oeuvre le sous-programme 35 provoquant la neutralisation recherchée.

Si le téléphone mobile 1 est déconnecté, en particulier électriquement arrêté, au moment où le message de signalisation est édité par le programme 36, l'information HLR marque un défaut de connexion du téléphone mobile 1. Ce téléphone mobile 1 n'est donc pas joignable par le réseau 3. Cette déconnexion peut par ailleurs résulter d'une déconnexion momentanée, du fait de mauvaises conditions de réception (passage sous un tunnel par exemple). Lors de la reconnexion, la relocalisation du téléphone mobile 1 provoque la mise à jour de l'information HLR dans la mémoire 34. Cette mise à jour de l'information HLR est alors exploitée, selon une modification propre à l'invention du sous-programme 36, pour transmettre un message de neutralisation déjà édité. Autrement dit, le message de neutralisation est émis si l'information HLR est valide, ou bien ce message de neutralisation est mis en attente et est émis dès que l'information de type HLR devient valide lors d'une reconnexion ou d'une relocalisation.

De manière à garantir la réception correcte dans le téléphone mobile 1 et/ou dans la carte SIM 2 du message de neutralisation, ce message de neutralisation comportera un mécanisme d'accusé de réception. La mémoire 34 doit de préférence être informée de la réception effective et de l'exécution du message de neutralisation. Dans ce but, l'utilisation du protocole de type SMS est préféré puisqu'en lui-même il comporte un tel mécanisme d'accusé de réception.

Afin de se prémunir contre une neutralisation intempestive, le sous-programme 35 comportera une vérification de l'identité de l'acteur qui envoie le message de neutralisation. En effet, cet acteur n'est pas nécessairement l'opérateur du réseau de téléphonie mobile 3, mais peut être un acteur d'un autre type. Par exemple, il peut être une banque à laquelle l'utilisateur s'est adressé. Le message de neutralisation comporte alors une clef d'identification qui doit être reconnue par le sous-programme 35. Ou encore, le message de neutralisation est lui-même chiffré et/ou signé et doit être déchiffré et/ou vérifié par le sous-programme 35. Dans ce but, l'enregistrement 28 de la clef privée est assorti d'un enregistrement en correspondance d'une clef administrative 37, PIN1 pour la clef privée 28. Dans ce cas, le sous-programme 35 va lire la clef 37, déchiffre ou autorise avec cette clef 37 l'exécution du programme de neutralisation, et neutralise la clef 28 correspondante. Au besoin, la clef 37 peut être mémorisée dans la mémoire 19, le sous-programme 35 étant mis en oeuvre par le microprocesseur 15 et étant contenu dans la mémoire programme 18. Autrement dit, on exécute l'algorithme d'empêchement correspondant au message d'empêchement si des droits représentés par la clef 37 le permettent.

En variante, plutôt que de modifier le mode de signature avec la clef privée 28, la neutralisation peut avoir pour effet d'empêcher la transmission, selon l'étape 9, du message signé par le téléphone mobile 1. Dans ce cas, c'est la partie correspondante dans le programme TEL de fonctionnement du téléphone mobile 1, contenu dans la mémoire 18, qui est modifiée (ou invalidée aussi bien). En variante, plutôt que d'empêcher l'émission d'un message de transaction signé correct, on provoque l'émission d'un message certes incorrect, mais surtout indiquant, de préférence en clair, que la signature de la transaction ne peut aboutir, que la clef de chiffrement a été neutralisée, ou tout autre message susceptible, en clair ou d'une manière codée, d'empêcher la réalisation d'une des étapes 10 à 13 d'une expérimentation sur une transaction correcte, et au moins la validation 14 de la transaction au cas où les opérations 10 à 13 ne seraient pas lancées.

Autant, pour des opérations hautement sensibles (notamment les achats), une procédure nécessitant l'intervention d'une autorité d'enregistrement AE et d'un producteur PB de bi-clefs et de certificats peut être nécessaire, autant dans certains cas, pour des transactions dont le coût ou l'importance peut être moindre, une telle procédure peut paraître lourde. Par exemple, il est possible qu'un organisme privé, une société pétrolière, veuille gérer elle-même les instructions et les neutralisations des clefs privées qu'elle attribue et les certificats qu'elle compose. Dans ce cas, dans le cadre de l'utilisation d'une clef privée de base 38 mémorisée dans la mémoire 25, cet organisme peut provoquer l'enregistrement 39 de certificats, de clefs privées complémentaires, et de codes de déchiffrement de neutralisation dans cette mémoire 25. Typiquement, les clefs 39 peuvent résulter d'éléments de programme, dits APPLETS programmés en langage JAVA, interprétables par une machine virtuelle stockée dans le programme 26 de la carte SIM 2 et rendant ces mises à jour téléchargeables à partir du réseau 3. Ces éléments de programme peuvent eux-mêmes être téléchargés dans la mémoire 24.

## Revendications

1. Procédé de certification en téléphonie mobile entre un utilisateur d'un téléphone mobile et un partenaire dans lequel un message d'une transaction entre l'utilisateur et le partenaire est édité, le message étant signé au moyen d'un algorithme de signature et d'authentification, le procédé étant **caractérisé en ce que** pour autoriser une révocation de la transaction en temps réel, on empêche dans le téléphone mobile que le message de transaction soit correctement signé et/ou correctement transmis en neutralisant le procédé de signature et/ou de transmission du certificat de transaction à valider, cet empêchement étant réalisé par l'envoi d'un message d'empêchement au téléphone mobile.

2. Procédé, selon la revendication 1, de certification de transaction en téléphonie mobile entre un utilisateur d'un téléphone mobile (1) et un partenaire (6) dans lequel
- un message d'une transaction entre l'utilisateur et le partenaire est édité (7),
- le message de la transaction est signé (8) avec une clé privée (28) de l'utilisateur, cette clé privée étant contenue (2) dans le téléphone mobile de l'utilisateur,
- le message de transaction signé est transmis (9) au partenaire,
- le partenaire doit se procurer (10, BD) la clé publique (X509) correspondant à l'utilisateur,
- le partenaire doit vérifier (12) le message de transaction signé à l'aide de la clé publique correspondante,
**caractérisé en ce que**, pour autoriser une révocation de la transaction en temps réel,
- on empêche (35), dans le téléphone mobile, que le message de transaction soit correctement signé et ou correctement transmis, et par cela on neutralise l'utilisation de la clé privée contenue dans le téléphone mobile, cet empêchement étant réalisé par l'envoi d'un message d'empêchement au téléphone mobile.

3. Procédé selon la revendication 2, **caractérisé en ce que** pour neutraliser,
- on modifie dans une carte SIM du téléphone mobile une adresse de la clé privée.

4. Procédé selon l'une des revendications 2 à 3, **caractérisé en ce que** pour neutraliser,
- on altère dans une carte SIM du téléphone mobile la clé privée.

5. Procédé selon l'une des revendications 2 à 4, **caractérisé en ce que** pour neutraliser,
- on modifie dans une carte SIM du téléphone mobile ou dans une mémoire programme du téléphone mobile un algorithme de signature.

6. Procédé selon l'une des revendications 2 à 5, **caractérisé en ce que** pour neutraliser,
- on modifie dans une carte SIM du téléphone mobile ou dans une mémoire programme du téléphone mobile une adresse d'au moins une instruction d'un algorithme de signature.

7. Procédé selon l'une des revendications 2 à 6, **caractérisé en ce que** pour neutraliser,
- on assortit la clé privée d'un index de validité, et on modifie la valeur de cet index.

8. Procédé selon l'une des revendications 1 à 7, **caractérisé en ce que**
- on empêche dans le téléphone mobile que le message de transaction soit correctement signé et/ou correctement transmis dès (36) qu'un ordre de révocation est reçu dans une base de données.

9. Procédé selon l'une des revendications 1 à 8, **caractérisé en ce que**
- on empêche dans le téléphone mobile que le message de transaction soit correctement signé et/ou correctement transmis en y provoquant une modification à la première connexion (HLR) au réseau de ce téléphone mobile, ou lors d'une relocalisation.

10. Procédé selon l'une des revendications 1 à 9, **caractérisé en ce que**
- un acteur, notamment un opérateur de téléphonie mobile, envoie à un téléphone mobile un message d'empêchement,
- on vérifie dans le téléphone mobile des droits (37) à émettre un message d'empêchement par cet opérateur, et
- on exécute un algorithme d'empêchement correspondant au message d'empêchement si les droits le permettent.

11. Procédé selon l'une des revendications 1 à 10, **caractérisé en ce que**
- on empêche dans le téléphone mobile par émission d'un message d'empêchement transmis par SMS.

12. Procédé selon l'une des revendications 1 à 11, **caractérisé en ce que**
- on fait transmettre par le téléphone mobile un message selon lequel la transaction est impossible.

13. Procédé selon l'une des revendications 1 à 12, **caractérisé en ce que**
- on-enregistre dans un téléphone mobile, par une télétransmission par le réseau un certificat, une clé privée correspondant à ce certificat, et une clé d'authentification administrative.

14. Dispositif de certification d'un message d'une transaction comportant
- un téléphone mobile (1) muni d'une mémoire secrète (25),
- un microprocesseur (22) de traitement, et
- une mémoire programme (24) contenant un algorithme (26) de signature du message par une clé privée (28) contenue dans la mémoire secrète, et un sous-programme (26) de transmission du message de transaction signé,
**caractérisé en ce qu'**il comporte
- un moyen (35) de rendre la signature et/ou la transmission incorrectes, ledit moyen étant activé par la réception d'un message d'empêchement.

15. Dispositif selon la revendication 14, **caractérisé en ce que** le moyen de neutralisation comporte un moyen d'exécuter un sous-programme de neutralisation.

16. Dispositif selon la revendication 15, **caractérisé en ce que** le sous-programme de neutralisation comporte une vérification d'action conditionnée par une clé administrative (37) contenue dans la mémoire secrète.

## Claims

1. Method for mobile telephony certification between a user of a mobile telephone and a partner, in which a message of a transaction between the user and the partner is prepared, the message being signed by means of a signature and authentication algorithm, the method being **characterised by** the fact that to authorise cancellation of the transaction in real time, the transaction message is prevented in the mobile telephone from being correctly signed and/or correctly transmitted by stopping the signature and/or transmission process of the transaction certificate to be validated, this prevention being effected by sending a prevention message to the mobile telephone.

2. Method, as described in claim 1, for mobile telephony transaction certification between a user of a mobile telephone (1) and a partner (6) in which
- a message of a transaction between the user and the partner is produced (7),
- the transaction message is signed (8) with a private key (28) of the user, this private key being contained (2) in the mobile telephone of the user,
- the signed transaction message is transmitted (9) to the partner,
- the partner must obtain (10, BD) the public key (X509) corresponding to the user,
- the partner must verify (12) the signed transaction message using the corresponding public key,
**characterised by** the fact that, to authorise cancellation of the transaction in real time,
- the transaction message is prevented (35) in the mobile telephone from being correctly signed and or correctly transmitted, and the use of the private key contained in the mobile telephone is thereby stopped, this prevention being effected by sending a prevention a message to the mobile telephone.

3. Method as described in claim 2, **characterised by** the fact that for stoppage,
- an address of the private key is modified in a SIM card of the mobile telephone.

4. Method as described in one of claims 2 to 3, **characterised by** the fact that for stoppage,
- the private key is altered in a SIM card of the mobile telephone.

5. Method as described in one of claims 2 to 4, **characterised by** the fact that for stoppage,
- a signature algorithm is modified in a SIM card of the mobile telephone or in a programmable memory of the mobile telephone.

6. Method as described in one of claims 2 to 5, **characterised by** the fact that for stoppage,
- an address of at least one instruction of a signature algorithm is modified in a SIM card of the mobile telephone or in a programmable memory of the mobile telephone.

7. Method as described in one of claims 2 to 6, **characterised by** the fact that for stoppage,
- the private key is associated with a validity index, and the value of this index is modified.

8. Method as described in one of claims 1 to 7, **characterised by** the fact that
- the transaction message is prevented in the mobile telephone from being correctly signed and/or correctly transmitted when (36) a cancellation instruction is received in a database.

9. Method as described in one of claims 1 to 8, **characterised by** the fact that
- the transaction message is prevented in the mobile telephone from being correctly signed and/or correctly transmitted by causing a modification to it at the first connection (HLR) to the network of this mobile telephone, or on relocation.

10. Method as described in one of claims 1 to 9, **characterised by** the fact that
- a participant, in particular a mobile telephony operator, sends to a mobile telephone a prevention message,
- in the mobile telephone, rights (37) for this operator to transmit a prevention message are verified, and
- a prevention algorithm corresponding to the prevention message is executed if the rights permit this.

11. Method as described in one of claims 1 to 10, **characterised by** the fact that
- prevention is effected in the mobile telephone by transmission of a prevention message transmitted by SMS.

12. Method as described in one of claims 1 to 11, **characterised by** the fact that
- a message is caused to be transmitted by the mobile telephone in accordance with which the transaction is impossible.

13. Method as described in one of claims 1 to 12, **characterised by** the fact that
- in a mobile telephone is stored, by remote transmission through the network, a certificate, a private key corresponding to this certificate and an administrative authentication key.

14. Device for certification of a message of a transaction including
- a mobile telephone (1) provided with a secret memory (25),
- a processing microprocessor (22), and
- a programmable memory (24) containing an algorithm (26) for signature of the message by a private key (28) contained in the secret memory, and a sub-program (26) for transmission of the signed transaction message,
**characterised by** the fact that it includes
- a means (35) for rendering the signature and/or the transmission incorrect, the said means being activated by reception of a prevention message.

15. Device as described in claim 14, **characterised by** the fact that the stoppage means include a means for execution of a stoppage sub-program.

16. Device as described in claim 15, **characterised by** the fact that the stoppage sub-program includes verification of action conditional upon an administrative key (37) contained in the secret memory.

## Patentansprüche

1. Verfahren zum Beglaubigen in der Mobiltelefonie zwischen einem Benutzer eines Mobiltelefons und einem Partner, bei dem eine Nachricht über eine Transaktion zwischen dem Benutzer und dem Partner editiert wird, wobei die Nachricht mittels eines Signatur- und Authentifizierungsalgorithmus signiert wird, wobei das Verfahren **dadurch gekennzeichnet ist, dass** zur Zulassung eines Widerrufs der Transaktion in Echtzeit im Mobiltelefon verhindert wird, dass die Transaktionsnachricht korrekt signiert und/oder korrekt übertragen wird, indem das Verfahren zur Signatur und/oder zur Übertragung des zu validierenden Transaktionszertifikats neutralisiert wird, wobei dieses Verhindern durch Senden einer Verhinderungsnachricht an das Mobiltelefon bewerkstelligt wird.

2. Verfahren nach Anspruch 1 zum Beglaubigen einer Transaktion in der Mobiltelefonie zwischen einem Benutzer eines Mobiltelefons (1) und einem Partner (6), bei dem
- eine Nachricht über eine Transaktion zwischen dem Benutzer und dem Partner editiert wird (7),
- die Transaktionsnachricht mit einem Privatschlüssel (28) des Benutzers signiert wird (8), wobei dieser Privatschlüssel in dem Mobiltelefon des Benutzers enthalten ist (2),
- die signierte Transaktionsnachricht zum Partner übertragen wird (9),
- der Partner sich den dem Benutzer entsprechenden öffentlichen Schlüssel (X509) beschaffen muss (10, BD),
- der Partner die signierte Transaktionsnachricht mit Hilfe des entsprechenden öffentlichen Schlüssels verifizieren muss (12),
**dadurch gekennzeichnet, dass** zur Zulassung eines Widerrufs der Transaktion in Echtzeit
- in dem Mobiltelefon verhindert wird (35), dass die Transaktionsnachricht korrekt signiert und/oder korrekt übertragen wird und dadurch die Verwendung des in dem Mobiltelefon enthaltenen Privatschlüssels neutralisiert wird, wobei dieses Verhindern durch Senden einer Verhinderungsnachricht an das Mobiltelefon bewerkstelligt wird.

3. Verfahren nach Anspruch 2, **dadurch gekennzeichnet, dass** zum Neutralisieren eine Adresse des Privatschlüssels in einer SIM-Karte des Mobiltelefons modifiziert wird.

4. Verfahren nach einem der Ansprüche 2 bis 3, **dadurch gekennzeichnet, dass** zum Neutralisieren der Privatschlüssel in einer SIM-Karte des Mobiltelefons geändert wird.

5. Verfahren nach einem der Ansprüche 2 bis 4, **dadurch gekennzeichnet, dass** zum Neutralisieren ein Signaturalgorithmus in einer SIM-Karte des Mobiltelefons oder in einem Programmspeicher des Mobiltelefons modifiziert wird.

6. Verfahren nach einem der Ansprüche 2 bis 5, **dadurch gekennzeichnet, dass** zum Neutralisieren eine Adresse mindestens eines Befehls eines Signaturalgorithmus in einer SIM-Karte des Mobiltelefons oder in einem Programmspeicher des Mobiltelefons modifiziert wird.

7. Verfahren nach einem der Ansprüche 2 bis 6, **dadurch gekennzeichnet, dass** zum Neutralisieren der Privatschlüssel mit einem Gültigkeitsindex versehen wird und der Wert dieses Index modifiziert wird.

8. Verfahren nach einem der Ansprüche 1 bis 7, **dadurch gekennzeichnet, dass** in dem Mobiltelefon verhindert wird, dass die Transaktionsnachricht korrekt signiert und/oder korrekt übertragen wird, sobald (36) ein Widerrufbefehl in einer Datenbank empfangen wird.

9. Verfahren nach einem der Ansprüche 1 bis 8, **dadurch gekennzeichnet, dass** in dem Mobiltelefon verhindert wird, dass die Transaktionsnachricht korrekt signiert und/oder korrekt übertragen wird, indem dort eine Modifizierung beim ersten Verbinden (HLR) dieses Mobiltelefons mit dem Netz oder bei einer Neulokalisierung bewirkt wird.

10. Verfahren nach einem der Ansprüche 1 bis 9, **dadurch gekennzeichnet, dass**
- ein Akteur, insbesondere ein Mobiltelefonie-Operator einem Mobiltelefon eine Verhinderungsnachricht sendet;
- in dem Mobiltelefon Rechte (37) zum Senden einer Verhinderungsnachricht durch diesen Operator verifiziert werden und
- ein der Verhinderungsnachricht entsprechender Verhinderungsalgorithmus durchgeführt wird, wenn die Rechte es erlauben.

11. Verfahren nach einem der Ansprüche 1 bis 10, **dadurch gekennzeichnet, dass** in dem Mobiltelefon durch Senden einer per SMS übertragenen Verhinderungsnachricht verhindert wird.

12. Verfahren nach einem der Ansprüche 1 bis 11, **dadurch gekennzeichnet, dass** das Mobiltelefon veranlasst wird, eine Nachricht zu übertragen, wonach die Transaktion unmöglich ist.

13. Verfahren nach einem der Ansprüche 1 bis 12, **dadurch gekennzeichnet, dass** in einem Mobiltelefon durch eine Femübertragung durch das Netz ein Zertifikat, ein diesem Zertifikat entsprechender Privatschlüssel und ein Schlüssel für die administrative Authentifizierung gespeichert werden.

14. Vorrichtung zum Beglaubigen einer Transaktionsnachricht mit
- einem mit einem Geheimspeicher (25) versehenen Mobiltelefon (1),
- einem Mikroprozessor (22) zur Verarbeitung und
- einem Programmspeicher (24) mit einem Algorithmus (26) zur Signatur der Nachricht durch einen Privatschlüssel (28), welcher in dem Geheimspeicher enthalten ist, und einem Unterprogramm (26) zur Übertragung der signierten Transaktionsnachricht,
**dadurch gekennzeichnet, dass** sie ein Mittel (35) aufweist, um die Signatur und/oder die Übertragung unkorrekt zu machen, wobei das genannte Mittel durch den Empfang einer Verhinderungsnachricht aktiviert wird.

15. Vorrichtung nach Anspruch 14, **dadurch gekennzeichnet, dass** das Neutralisierungsmittel ein Mittel zur Durchführung eines Neutralisierungsunterprogramms aufweist.

16. Vorrichtung nach Anspruch 15, **dadurch gekennzeichnet, dass** das Neutralisierungsunterprogramm eine Aktionsverifizierung enthält, welche durch einen in dem Geheimspeicher enthaltenen administrativen Schlüssel (37) bedingt ist.
